# EUROPEAN PATENT APPLICATION

(11) **EP 4 764 277 A1**
(43) Date of publication of application: **24.06.2026**
(21) Application number: 24221018.5
(22) Date of filing: 18.12.2024
(51) Int. Cl.: F16L 5/04, H02G 3/04, H02G 3/22

(54) **CONSTRUCTIONAL THERMOMANAGEMENT FOR CABLE SLEEVES AND BOXES PREFORMED TO BE INSTALLED IN A FIREWALL**

(71) Applicant: Hilti Aktiengesellschaft, 9494 Schaan (LI)
(72) Inventor: Förg, Christian, 86807 Buchloe (DE)
(74) Representative: Hilti Aktiengesellschaft Corporate Intellectual Property

(57) **Abstract**

Metallic housing (5) for a firestop through penetration device (4). The housing (5) is preformed to be installed in a breakthrough (3) of a firewall (2) to form a side wall of an axial channel and configured to receive penetrants (10); it has one or more of the following constructional features reducing thermal conduction between its opposite openings (6, 7):
- a radial thickness of less than 2 mm; and/or
- stainless steel, chrome steel, and/or other steel alloys with chrome, nickel, molybdenum, titanium, and/or tungsten used as its material(s); and/or
- a corrugated longitudinal profile, increasing the length of heat conduction paths connecting the opposite openings (6, 7); and/or
- a plurality of slots (17, 17a, 17b) extending at least partly in a circumferential direction and being successively arranged in the axial direction with offsets, increasing the length of heat conduction paths connecting the opposite openings (6, 7).

## Description

### Field of the invention

The invention relates to a metallic housing for a firestop through penetration device, to a corresponding device, and to a firestop system including a firewall with such a device installed therein. The housing is preformed to be installed in a firewall and to form a side wall of an axial channel with opposite openings to both sides of the firewall, so that a penetrant feedthrough for cables, pipes and the like may be created in the firewall by using the device. The device further includes a fire seal arranged in the housing and configured to surround penetrants inserted in the channel and to seal the channel, at least in the event of fire, against smoke and/or flames and/or liquids.

### Description of the prior art

Firestop through penetration devices in various designs are known in the art. They may, inter alia, be available in a preformed configuration, which is more or less ready to be installed in a firewall breakthrough. For example, devices referred to as "fire protection sleeves", "cable sleeves", or "cable boxes" have been used in the fire protection sector for many years, in various designs. In general, they typically have two basic components: a metal housing and a fire seal, which usually includes intumescent materials, known to swell when exposed to heat.

One requirement of firestop through penetration devices within a firewall is to provide a certain level of insulation protection in case of fire. For example, a temperature-based level of insulation protection, also known as a temperature rating (or T-rating), ensures that the temperature measured on the device during an official fire test does not exceed a threshold of 180°K for some period of time, typically 30, 60, 90, or 120 minutes.

As an example of a fire protection sleeve having a round or circular cross-section, US 8,833,478 B2 discloses a fire stop system with a pass-through device which may be installed around a bundle of cables in a structural opening. The system comprises a housing shaped as a pipe split along its longitudinal axis, so as to be opened and closed during the installation. The split pipe has a first end and a second end, wherein the first end and the second end have an intumescent material installed thereon for sealing the split pipe when exposed to elevated temperatures. The system further comprises a foam wall gasket installed around the split pipe adjacent the structural opening, wherein the foam wall gasket forms a contour to the structural opening blocking air flow between the split pipe and the opening; an annulus plate covering the foam wall gasket, wherein the annulus plate is positioned around the split pipe at the structural opening; and pie foam disks installed on the intumescent material at the first end and the second end of the split pipe, wherein the pie foam disks have a plurality of slots forming a plurality of triangular shaped sections.

As another example, a rectangular cable box known in the art typically includes a housing made of metal, which may, for example, be lined on the inside with expandable silicate panels, used as intumescent material, and further include an elastic foam layer laminated with aluminium foil. The elastic foam layer is arranged around cables or cable groups installed in the cable box, so as to achieve smoke gas tightness.

Cable boxes are often available with an axial length of less than or equal to 150 mm, so as to be installed e.g. in a 100 mm thick wall. This allows to achieve, for example, a fire and T-rating of 120 minutes without problems. However, to provide the desired fire protection level, available cable boxes usually have to be completely grouted in: For example, the gap formed between the metal housing of the cable box and the inner surface of a breakthrough in the firewall (also denoted as "annular gap", even with rectangular cross-sections of the housing or the breakthrough) must be completely filled with mortar or plaster. This is important because otherwise the metallic housing will conduct too much heat to the side facing away from the fire in the event of a fire, meaning that the temperature criterion of max. 180°K can no longer be achieved. In addition, often only cables with a predetermined small cross-section, such as, for example, maximum 21 mm, are allowed to be fed through the cable box, in order to achieve the desired fire or T-rating.

Overall, heat conduction by the metal housing is a major problem in order to achieve good fire resistance classes, such as EI120. Temperature ratings required by the applications are often difficult to achieve with preformed fire stop through penetration devices, as their body (or housing) is typically constructed from steel, which provides the desired mechanical properties for the function of the device but also provides a conductive pathway for heat to be transferred from the fireside of the wall to the cold side, where the temperature is measured. If possible, a preformed cable box should be able to be processed without the use of mortar or plaster; however, there are almost no solutions on the market that satisfactorily fulfill this requirement. Solutions without mortar always have limitations, such as: "only small cable diameters permitted", or "cable box must correspond as far as possible to the wall thickness". In some cases, such boxes must even be insulated afterwards, e.g. by applying additional insulation layers to the exterior of the device on the cold side of the firewall, in order to meet the fire protection requirements.

### Summary of the invention

To solve these problems, a metallic housing for a firestop through penetration device, a firestop through penetration device, and a firestop system are provided as defined in the independent claims. Further embodiments are specified in the dependent claims. Any feature or technical effect described herein for the housing correspondingly also applies to the device and the system, and vice versa.

According to a first aspect, a metallic housing for a firestop through penetration device is provided. The housing is preformed so as to be installed in a breakthrough of a firewall (which may be a wall or a floor in a building or a facility) and to form a side wall of an axial channel having opposite openings to both sides of the firewall and configured to receive penetrants, such as cables or wires, pipes and the like. Herein, an axial direction of the housing is a direction parallel to its longitudinal axis, which coincides with the channel axis of said axial channel.

The term "metallic housing" used herein may, for example, mean that the whole housing or at least most of it is made of (or constructed from) one or more metals and/or metal alloys. Thereby, for instance, a special/desired mechanical stability may be achieved not only for normal conditions, but also in case of fire. The metallic housing may, for example, have a metallic one-piece base construction, which may optionally include minor inserts or fill-ins of non-metallic materials. A one-piece base construction may, for example, be favourable in terms of mechanical stability and/or manufacturing effort. Alternatively, the housing may also be composed of several metallic parts made of the same or different metallic material(s). The term "most of the housing" may refer to its geometrical dimensions and, for example, mean at least 60%, specifically at least 70%, preferably at least 80 % and most preferably at least 90% of a total outer surface or, alternatively, of a total axial length of the housing. The constructional features of the housing proposed in the following pertain to its metallic parts, unless otherwise specified.

The housing proposed herein has a reduced or, ideally, minimized thermal conduction between its opposite openings (i.e. thermal conduction from one opening to the other, in particular, in case of fire on one side of the firewall) due to one or more of the following constructional features or, ideally, an optimized combination thereof:
- metallic parts of the housing have a radial thickness (i.e. a wall thickness of the channel wall formed by the housing) of less than 2 mm, specifically between 0.4 mm and 1 mm; and/or
- metallic parts of the housing are made of stainless steel, chrome steel, or steel alloys with chrome, nickel, and molybdenum, and/or also with titanium and/or tungsten; and/or
- in a longitudinal section taken along its axial direction, the housing has a corrugated profile (in particular, a ribbed, curved, undulating or wavy profile), so as to increase the length of heat conduction paths connecting the opposite openings; and/or
- the housing has a plurality of slots (such as punching holes, cutouts, press cuts, or otherwise created slits or elongated through-holes), each of which extends at least partly in a circumferential direction of the housing, the slots being successively arranged in its axial direction with offsets with respect to each other, so as to increase the length of heat conduction paths connecting the opposite openings of the housing.

Thereby, an improved insulation protection or temperature rating for metal-based preformed firestop through penetration devices may be provided. In particular, with the proposed construction of the housing (and of the device and the system as described in more detail herein below), the necessity of applying mortar or plaster and/or adding extra insulation material to the device during installation in order to achieve a required fire protection level, as it is known from conventional cable boxes, may be overcome. For example, a cable box with lower temperature on the housing in case of fire may be obtained with the proposed solution.

The housing may, in particular, be shaped as a casing or as a tube (also denoted as a pipe or a sleeve) having a round, circular, oval, rectangular, square, triangular or any other suitable shape of cross-section. The housing (as well as the whole firestop through penetration device, which is described further below and includes a fire seal arranged in the housing and sealing the channel in case of fire) may, in particular, be preformed such as to be readily (i.e. not requiring specific professional skills or much effort; in other words, easily) installed in a horizontal breakthrough in a wall or a vertical breakthrough in a floor, such as, for example, known from the related art mentioned at the outset.

Specifically, though not necessarily, the proposed slots and/or corrugated profile segments may at least partly be arranged in a central or mid-distance segment (in the sense of a region, or portion) of the housing with respect to its axial dimension. Such a central or mid-distance segment may extend in the axial direction of the housing over a predetermined length of, by way of example only, three quarters, two thirds, a half, a third, a quarter or less of the total axial length of the housing. The slots and/or corrugated profile segments may be formed in any part of such a central or mid-distance segment. In other words, a central arrangement is not limited to a centrally symmetrical arrangement of these structures, though this may be preferred for many reasons, both thermal and mechanical. But in general, it only means that at least a part of these structures may be found closer to the centre than to the opposite openings of the housing in its axial direction. Thereby, for example, the effectivity of these structures for the reduction of thermal conduction between the opposite openings of the housing may be increased.

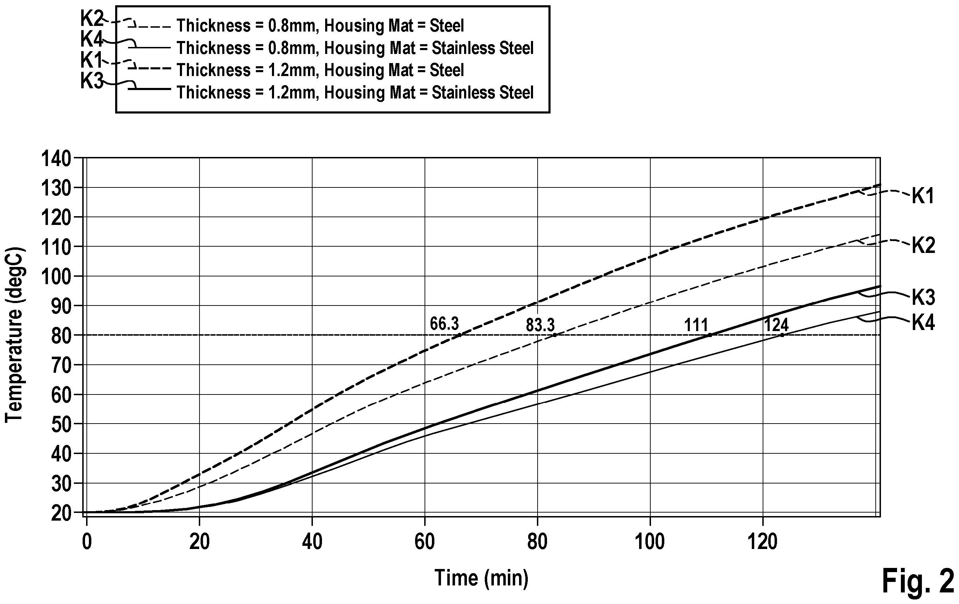

As illustrated, by way of example only, in Fig. 2, by selecting the material(s) of the housing from the group of: stainless steel, chrome steel, or other steel alloys with chrome, nickel, molybdenum, titanium, and/or tungsten; in combination with the radial thickness of the metallic parts of the housing being selected in the range from 0.4 mm to 1 mm, a particularly effective reduction of thermal conduction over the housing may be achieved. In this embodiment, the radial thickness of the metallic parts of the housing may, by way of example only, be 0.6 mm, 0.7 mm, 0.8 mm, or 0.9 mm etc.

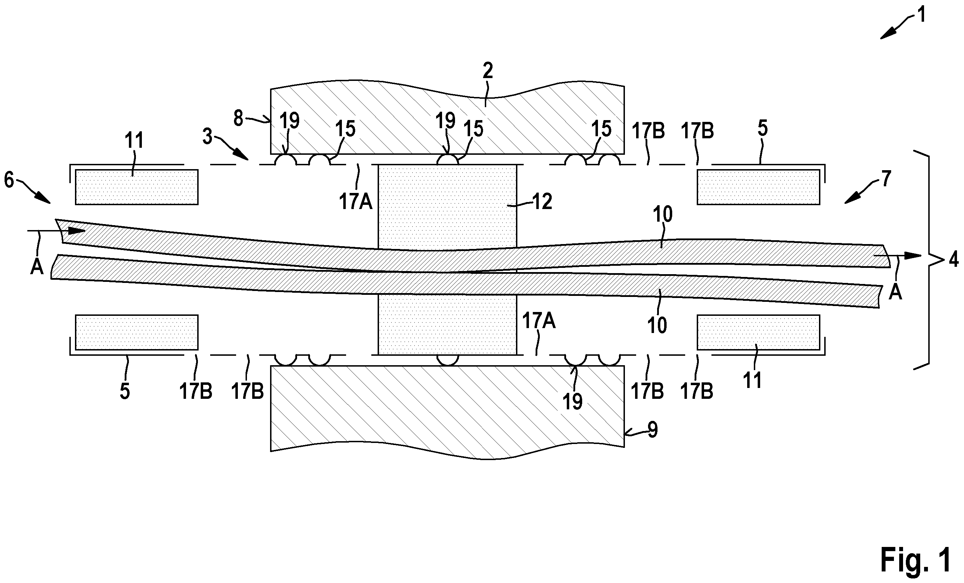

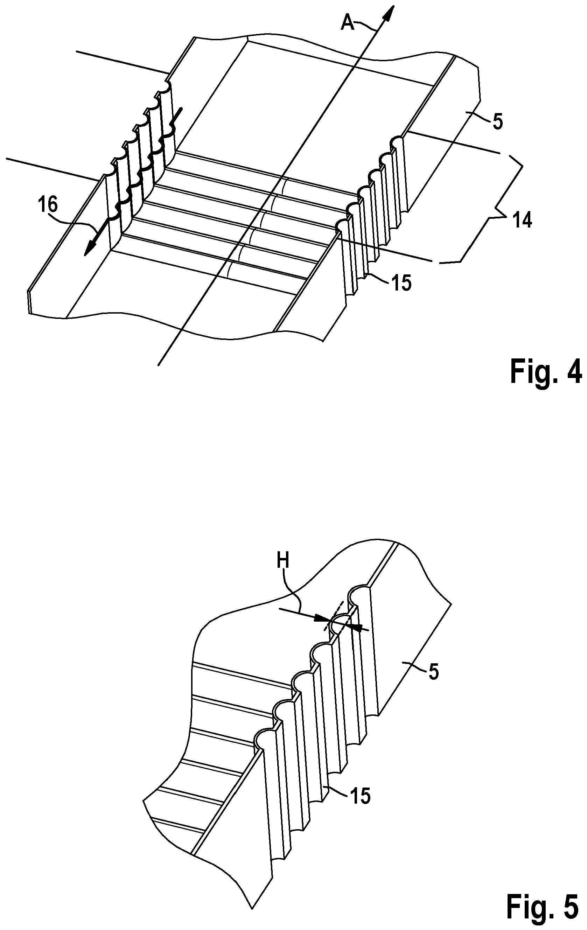

According to a specific embodiment, the above-mentioned corrugated longitudinal profile may at least partly be formed by a plurality of hollow ribs extending at least partly in a circumferential direction of the housing (i.e. in a direction around its longitudinal axis) and being successively arranged in its axial direction. This can, for example, be favorable for manufacturing. As illustrated, by way of example only, in the attached drawings, the cross-sections of the hollow ribs may be selected to be curved inwards (Fig. 4-5, and 8) or outwards (Fig. 1), as seen in the radial direction of the housing, depending, for instance, on how much contact between the housing and the inner surface of the firewall breakthrough is desired in a specific application.

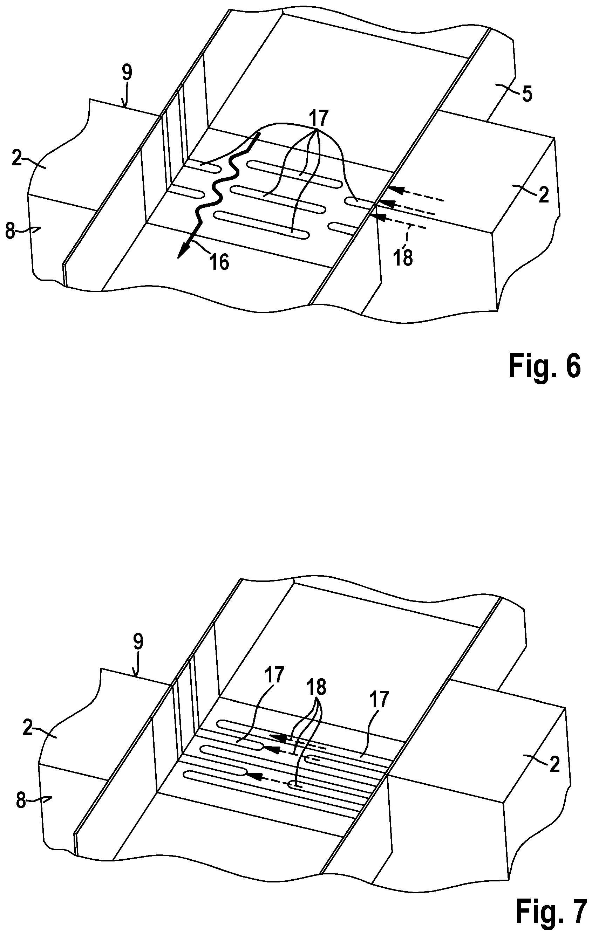

According to a specific embodiment, the above-mentioned plurality of slots may comprise two, three or more lines extending, at least partly, in a circumferential direction of the housing and being successively arranged in its axial direction. In other words, the lines are arranged one after another, when seen in the axial direction of the housing. Here, each line is formed by a plurality of slots which extend at least partly in its direction. The length of each slot significantly exceeds its width, e.g. by many times, so that the slots a clearly distinguished from simple holes or perforations. Furthermore, in order to achieve the functionality proposed above, the slots of one of said lines are offset in the circumferential direction of the housing with respect to the slots of at least one of the other lines, so that the length of metallic heat conduction paths running between these slots and connecting the opposite openings of the housing is increased (as illustrated, by way of example only, in Fig. 6).

For example, at least one of these lines of slots may lie in a plane oriented transversely or, in particular, perpendicularly to the longitudinal axis of the channel and of the housing. This is, of course, not necessary. Such a line of slots may, for example, also be curved to some degree out of a respective plane. Furthermore, the successive lines of slots may also be formed by successive windings of one and the same helix wound around the longitudinal axis of the housing. The same may correspondingly apply to the orientation of the above-described circumferential ribs. (Herein, as understood by a skilled person, any geometrical term, such as "perpendicularly" or "circular or rectangular cross-section", used to describe geometrical shapes of the parts to be manufactured, is not meant as limiting their scope to a mathematically precise geometrical shape and, instead, always includes possible or indispensable manufacturing and constructional tolerances.)

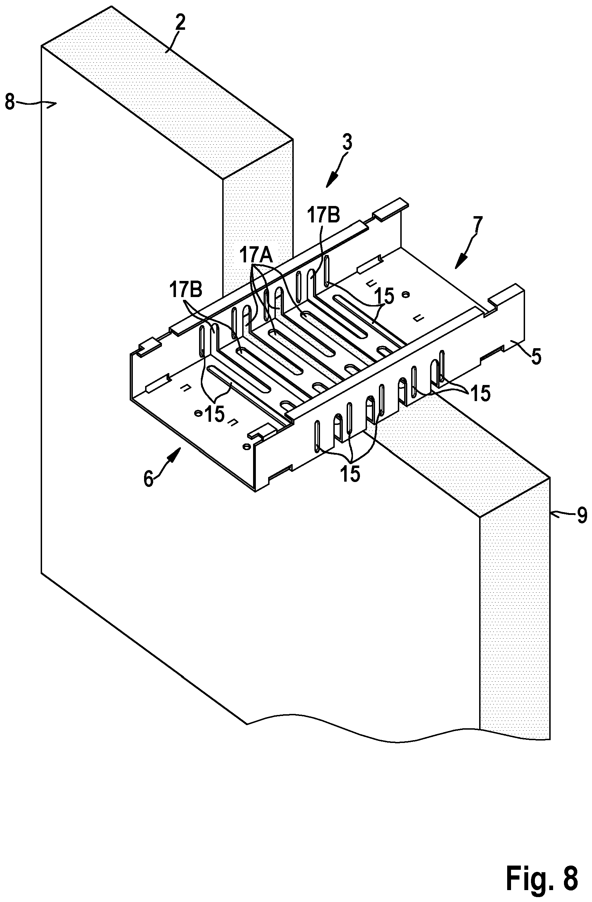

Specifically, in at least one of said lines, each slot may be at least twice, preferably at least three to five times and most preferably at least five to ten times, as long as the distance between the successive slots (as illustrated, by way of example only, in Figs. 7 and 8). Thereby, the lengths of possible metallic heat conduction paths connecting the opposite openings of the housing are further increased in comparison to the axial length of the housing, thus further reducing the thermal conduction of the housing. Here, both the slot length and the distance between the slots are measured in the direction of the respective line.

Still more specifically, when considered in an orthogonal projection onto a cross-sectional plane of the housing (i e. in a vertical projection onto a plane vertically oriented to the channel axis), the slots of at least one of these lines may overlap the slots of at least one of the other lines (preferably, of each directly successive line) by at least a half of their respective slot lengths measured in the respective line direction. Alternatively or additionally, the slots of at least one of these lines may be offset in the respective line direction by at least a quarter, and preferably at least a third, of their lengths relatively to the slots of another one of these lines (preferably, of each directly successive line). Both is illustrated, by way of example only, in Figs. 7-8. Thereby, the lengths of possible metallic heat conduction paths connecting the opposite openings of the housing are still further increased.

In the housing as proposed herein, gaps or voids generated in the metallic part(s) by the proposed slots may specifically, though not necessarily, be at least partly filled, covered or replaced by another material. To this aid, basically, any non/less conductive (or non-metallic) material which has suitable mechanic properties under normal conditions and a significantly lower thermal conductivity and/or a significantly lower melting point than that of metal(s) or metal alloy(s) used in the housing may be selected, such as plastics or plastic foil etc.

As a further aspect, a firestop through penetration device preformed to be installed in a firewall and to create a penetrant feedthrough is provided. The device comprises a housing proposed herein and a fire seal arranged in the housing and configured to surround penetrants (such as cables or wires, pipes and the like), which may be inserted in the channel. The fire seal is configured to seal the channel - at least in the event of fire - against smoke and/or flames and/or liquids in any suitable manner as, for example, known in the art. To this end, for example, strips or sheets of an intumescent material, foam, fire-resistant fabrics etc. may be used. An intumescent layer can be, for instance, made on the basis of expandable graphite or expandable silicate panels. The housing of the device may be secured to the firewall by any suitable means, such as, for example, known in the art and including, by way of example only, cast-in methods and/or fixing flanges with bolts and sealing gaskets etc. Preferably, the firestop function of the through penetration device is provided both with and without penetrants received in the channel.

In particular, the firestop through penetration device proposed herein may be preformed so as to be readily installed in a firewall, thereby providing a predefined level of insulation protection in case of fire, such as T-rating levels mentioned at the outset or Fire resistance class EI120 or, if required, also higher. This is achievable alone by a suitable combination of constructional features of the housing and of the fire seal as proposed herein, without a need for additional insulation material and measures, and, in particular, without filling in plaster, mortar or other curing compounds into an annular gap which may be left between the housing and an inner surface of the breakthrough. Adding insulation layers to the exterior of the housing, as known from the related art, is also not required.

In particular, the proposed device may be configured to be installed in a firewall whose thickness is equal to or less than a total axial length of the device. The firewall thickness may, in particular, lie between 100 mm and 150 mm and, preferably, also be 100 mm or even less.

Specifically, in the firestop through penetration device proposed herein, the fire seal may comprise intumescent material restricted to axial segments arranged close to the opposite openings of the housing. In other words, these axial segments are then spatially separated by a central segment which is free of intumescent material. This may, in particular, be useful in case of expandable graphite, which is a good heat conductor and may be prevented from contributing to a thermal connection of the opposite openings of the housing by this configuration. For a similar reason, additionally or alternatively, the fire seal may comprise intumescent material which contains expandable graphite and is arranged only in those axial segments of the housing which do not contain the above-mentioned slots, so as not to cancel out their effect. Finally, additionally or alternatively, the fire seal may comprise foam material and/or mineral wool arranged, in particular, in said central axial segment of the housing. This may, for example, provide a certain level of protection, e.g. against smoke and/or cold air, in all the situations when there is no fire and, therefore, the intumescent material is not yet swollen.

In an alternative embodiment of the firestop through penetration device proposed herein, the fire seal may comprise intumescent material arranged in the central axial segment of the housing. In other words, in this embodiment the axial segments of the housing are then free of intumescent material. This may, in particular, be possible in case of an expandable material which is not in a form with high density and high thermal conductivity, in particular if the intumescent foam has a density of less than 1. In this case the intumescent material shows less heat conductivity compared to an intumescent material comprising expandable graphite and having a higher density. Finally, additionally or alternatively, the fire seal of this embodiment may comprise foam material and/or mineral wool arranged, in particular, close to the opposite openings of the housing. Compared to the embodiment described in the previous paragraph the position of the intumescent material and that of the foam material and/or mineral wool is exchanged. In this embodiment, the slots need preferably to be positioned only in those axial segments of the housing which do contain the foam material and/or the mineral wool so as not to cancel out their effect.

In further embodiments of the fire stop through penetration device an insulating material may be arranged between the intumescent material and the housing to thermally decouple the housing from the intumescent material, in particular when the intumescent material comprises expandable graphite and has a high density, and thus a high heat conductivity. The insulating material is preferably a thin isolating material and can be made of any insulating and non-combustible material, preferably glass wool or mineral wool, and has preferably a thickness of 0.80 mm to 5 mm, more preferably a thickness of 2 mm to 4 mm.

As a further aspect, a firestop system is provided. The system comprises a firewall or its element or section (also briefly denoted herein as wall element or wall section) including a breakthrough, and a firestop through penetration device as proposed herein. The device is installed in the breakthrough, thus creating or allowing to create a penetrant feedthrough in the firewall or, respectively, in its element or section.

Specifically, though not necessarily, in an axial segment arranged within the breakthrough, the housing of the device may have at least one slot-free segment and be installed in the breakthrough such that this slot-free segment is either in a direct mechanical and thermal contact with the inner surface of the breakthrough or is covered by (or is otherwise in a direct mechanical and thermal contact with) a material having a high thermal conduction and/or thermal capacity arranged in (for example, filling) an annular gap formed between said slot-free segment of the housing and the inner surface of the breakthrough. Thereby, in case of fire, heat conducted by the metallic housing may be effectively dissipated to the firewall, thus reducing heat transport to the opposite side of the housing.

Alternatively or additionally, in an axial segment arranged within the breakthrough, the housing of the device may have the above-mentioned slots and be installed such that a gap of a predetermined radial thickness is left between the segment of the housing having said slots and the inner surface of the breakthrough. Thereby, the intended effect of the slots (namely, reduction of heat conduction by the housing material) may be additionally supported or ensured.

For a similar reason, alternatively or additionally, the axial length of the device may exceed the thickness of the firewall, and in at least one of its axial segments arranged outside the breakthrough, the housing of the device may have said slots. These may be left empty or, alternatively, filled or covered with a non-metallic material having a lower thermal conductivity and/or a lower melting point than metallic material(s) of the housing.

Again, for a similar reason, alternatively or additionally, the axial length of the device may exceed the thickness of the firewall, and in at least one of its axial segments arranged outside the breakthrough, the fire seal may comprise intumescent material which contains expandable graphite. In this case, this intumescent material is arranged only in those axial segments of the housing which are free of the above-mentioned slots, so as not to cancel out their intended effect.

According to an embodiment, in its axial segment arranged within the breakthrough, the housing of the device has at least one segment including said slots and, additionally, at least one slot-free segment which includes one or more hollow ribs, each rib being curved outwards and all ribs having the same predetermined height/depth in the radial direction of the housing. In this embodiment, the housing is installed in the breakthrough such that the backs of said ribs are in a direct mechanical and, thus, also thermal contact with the inner surface of the breakthrough, whereby said gap with a radial thickness equal to the rib height/depth is formed between the segment of the housing having said slots and the inner surface of the breakthrough. Thereby, heat conduction along the housing is reduced both by the ribs and by the slots and, at the same time, heat dissipation to the firewall is allowed via the backs of the ribs.

### Brief description of the drawings

The above-described aspects of the invention as well as their specific design variations will be further explained in the following with reference to the attached schematic drawings. Even though the drawings may, in particular, also be seen as true to scale, this is not to be understood as limiting: Each drawing mainly serves as only a schematic illustration of basic principles of the present invention.
- Fig. 1: is a longitudinal cut of a firestop system according to an exemplary embodiment;
- Fig. 2: is a diagram showing simulation results of temperature over time measured on the side facing away from fire with a metallic square sleeve having different steel qualities and material thicknesses;
- Fig. 3: is a diagram showing simulation results of temperature over time measured on the side facing away from fire with a metallic square sleeve for different thicknesses of air layer (or radial gap) separating it from the material of the firewall;
- Fig. 4: is a perspective, partly sectional view of a housing for a firestop through penetration device according to another exemplary embodiment with a sequence of hollow circumferential ribs in the centre of its housing which has a rectangular cross-section;
- Fig. 5: is another perspective, partly sectional view of the housing of Fig. 4 showing the depth of its hollow ribs in more detail;
- Fig. 6: is a perspective, partly sectional view of a firestop system according to another exemplary embodiment with a firestop through penetration device having offset slots in the centre of its housing which has a rectangular cross-section;
- Fig. 7: is a perspective, partly sectional view of a firestop system according to a further exemplary embodiment with a firestop through penetration device having a sequence of lines with strongly overlapping offset slots in the centre of its housing which has a rectangular cross-section;
- Fig. 8: is a perspective, partly sectional view of a firestop system according to a still further exemplary embodiment with a firestop through penetration device having in its housing a sequence of lines with strongly overlapping offset slots not only within the breakthrough, but also outside it, as well as a structure of hollow ribs extending in parallel with the slots; and
- Fig. 9: is a diagram showing simulation results of temperature over time measured on the side facing away from fire with a metallic square sleeve for different thicknesses of air layer or radial gap separating it from the material of the firewall, in each case with and without the offset slots.

### Detailed description of exemplary embodiments of the invention

Any of the different embodiments, variations and specific features of the housing, the firestop through penetration device and the firestop system according to the above aspects of the invention, which are mentioned in the above description or in the following claims, may be implemented in the exemplary embodiments shown in Figures 1 through 9 additionally or alternatively, if not already included therein. Therefore, to avoid unnecessary repetitions, not all of them will be explicitly mentioned again with reference to the drawings. The same also applies to the definitions and technical effects already specified above with reference to the individual features, which are illustrated in Fig. 1-9.

As already mentioned above, the invention provides an improved insulation protection or temperature rating for preformed firestop through penetration devices having a metallic housing, without the necessity to add extra insulation material to the device during installation. This is achieved by a universally applicable overall solution for the housing, the device and the system as proposed herein, which may, in particular, have the following properties:
- An optimized combination of various findings or ideas to reduce heat conduction on the housing as much as possible, the individual findings/ideas/factors or features A.) - H.) being listed and described in the following with reference to the attached drawings (Figs. 1-9);
- Solution without the use of curing compounds in the annular gap, formed, as the case may be, between the housing and the firewall within its breakthrough;
- No need for additional measures or additional insulation materials, when using the fire protection solution proposed herein;
- Overall consideration including the above-mentioned annular gap.

Fig. 1 shows a longitudinal section of a firestop system 1 according to an exemplary embodiment of the invention. The system includes a firewall 2 (or firewall element, also briefly denoted herein as wall element or wall section) including a breakthrough 3 and a firestop through penetration device 4 according to an exemplary embodiment of the invention installed therein. The device 4 comprises a metallic housing 5, which is preformed to be installed in the breakthrough 3 and to form a side wall of an axial channel with a longitudinal axis A and opposite openings 6 and 7 to both sides 8 and 9 of the firewall 2, so that penetrants 10 (such as cables, wires or pipes and the like) can be received in the channel, thus creating a penetrant feedthrough. The device 4 further comprises a fire seal arranged in the housing 5 and configured to surround penetrants 10 inserted in the channel and to seal the channel, at least in the event of fire, against smoke and/or flames and/or liquids.

By way of example only, in Fig. 1 the fire seal comprises two intumescent material elements 11 arranged only in axial segments close to the opposite openings 6 and 7 of the housing 5, said axial segments being spatially separated by a central segment, which extends within the breakthrough 3 and is free of intumescent material in this specific example. (As already mentioned above, the axial direction of the housing 5 is a direction parallel to the longitudinal axis A of the housing 5 and of the channel created thereby.) The fire seal further comprises a foam material and/or mineral wool element 12 arranged in said central axial segment of the housing 5. In this example, the axial length of the device 5 exceeds the thickness of the firewall 2, so that the axial segments with the intumescent material elements 11 are arranged outside the breakthrough 3 to both sides 8 and 9 of the firewall 2.

By way of example only, the housing 5 of Fig. 1 may have a rectangular or square cross-section (not seen in the longitudinal cut of Fig. 1, but shown in other Figs. 4-8), but alternatively it may also have a circular, round, or any other shape of cross-section. Further specific features of the exemplary embodiment of the firestop system 1 shown in Fig. 1 will be described at the end of the following, more general and comprehensive description of the solution proposed herein.

The proposed solution is based on and supported by comprehensive simulation results, a representative selection or which will be only briefly described in the following. Based on a large number of various simulation results, the following features/factors A.) - H.) characterizing the proposed firestop system were found out to be particularly relevant for low heat conduction to the cold side of the firewall:
A.) Material thickness of the housing: < 2mm, preferably in the range of 0.4-1 mm.
B.) Metal housing material type: Preferably stainless steel, chrome steel, various steel alloys with chrome, nickel and molybdenum, but also titanium, tungsten. A representative comparison (not depicted) of measured thermal conductivities of stainless steel and structural (or normally used, constructional) steel shows that thermal conductivity of stainless steel is a factor 3,6 (!) lower than that of constructional steel at temperatures below 100 °C, this huge difference slowly linearly decreasing with increasing temperature and disappearing only above 800 °C.

As shown in Fig. 2, a comparison of different steel qualities in a simulated square sleeve confirmed these two findings:
Fig. 2 shows simulation results of temperature over time measured on a metallic square sleeve (or housing) of different steel qualities (normal steel vs. stainless steel) and material thicknesses (1.2 mm vs. 0.8 mm) on the side (or opening of the housing) facing away from fire. An approximately 20% lower temperature was found when analysing the two materials. This effect could be demonstrated for both thin and thicker materials. As shown in the diagram, starting at room temperature (or approximately 20 °C at 0 min), for example, 80 °C is achieved after 66.3 minutes if housing material is steel with 1.2 mm thickness (curve K1), after 83.3 minutes if housing material is steel with 0,8 mm thickness (curve K2), after 111 minutes if housing material is stainless steel with 1.2 mm thickness (curve K3), and only after 124 minutes if housing material is stainless steel with 0.8 mm thickness (curve K4) .

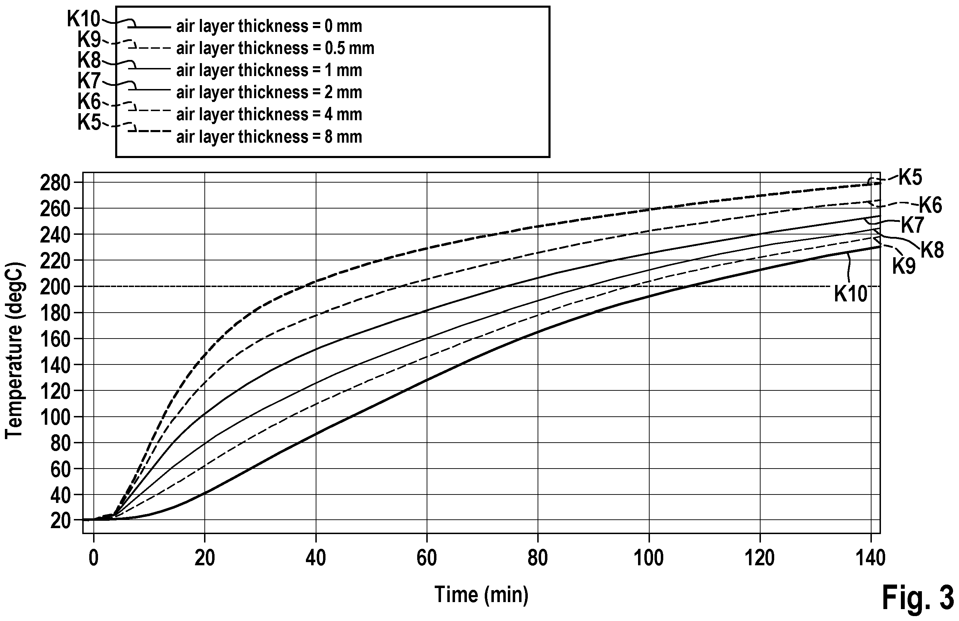

As evident from Fig. 2, combining the above features A.) + B.), a thin stainless-steel body needs 124 min to heat up to 80°C on its side facing away from the fire. Comparing this with a 1.2 mm thick steel housing, in this case it only takes 66 minutes. An improvement by a factor of 2 is therefore possible by combining features A.) and B.): In view of the fact that a stainless-steel quality has significantly better mechanical properties, a similarly stable component can be manufactured almost 50% thinner than a comparable solution in "normal steel quality".
C.) Contact of the fire protection sleeve (or housing) with the substrate (or firewall material, such as concrete, within the breakthrough). For standard housing types (without e.g. additional features E.), F.), or E.) +F.) following below), a good contact of the housing with the substrate is helpful, in the sense that a certain amount of heat can be dissipated into the wall or ceiling material. As evident from the diagram shown in Fig. 3, a gap of 0 mm or a complete filling of the annular gap with mortar is preferred in such cases.

So, Fig. 3 is a diagram of simulation results showing temperature over time measured on a metallic square sleeve (or housing) on its side facing away from fire for different thicknesses of air layer (or radial gap) separating it from the material of the firewall. A comparison of the curves from K5 to K10 reveals, that a continuously growing time is needed to heat up the metallic sleeve to e.g. 200°C on its side facing away from the fire if the air layer thickness continuously decreases from 8 mm (curve K5) to 0 mm (curve K10).

If there is still a gap to the substrate, it can, in general, be filled with materials that either have good thermal conductivity or alternatively have a high thermal capacity themselves. These framework conditions can be defined with the design of the fire test, i.e. the approval test. However, alternatively, an air gap between the housing and the firewall material may also be used to reduce the thermal conduction of the housing, e.g. by employing the features F.) and G.) (offset slots in the housing) as analysed further below.
D.) Distance due to the firewall thickness (wall thickness of the substrate): As known from many fire tests, a large firewall thickness is helpful to achieve good T-rating results. The wall thickness is normally in the range of approximately 100-200 mm. Thick firewalls are helpful in achieving the test objective. However, the solution for fire protection boxes (or firestop through penetration devices) proposed herein, in particular, allows to provide a universal installation option, which is also suited for very thin walls of e.g. 100 mm wall thickness.
E.) Distance due to a specific housing construction I (corrugated longitudinal profile)
   The thermal conduction distance can be extended by hollow circumferential ribs and similar structures yielding a corrugated (e.g. ribbed or wavy) longitudinal profile of the housing. The effect is similar to a good distance caused by the firewall thickness (cf. the above feature D.) and is illustrated in Figs. 1, 4 and 5 described in the following:

Fig. 4 shows a perspective, partly sectional view of a housing 5 for a firestop through penetration device (not depicted) according to another exemplary embodiment of the invention. In this embodiment, the housing 5 has a sequence of hollow circumferential ribs (or embossings) forming a rib structure 15 in its central axial segment 14. The housing 5 has, by way of example only, a rectangular cross-section. In this example, the hollow curvature of each hollow rib is directed inwards in a radial direction of the housing 5, which is perpendicular to its longitudinal axis A. As indicated by the wavy shape of a heat flux arrow 16, the rib structure 15 increases the length of heat conduction paths in the axial direction of the housing 5, i.e. connecting its opposite openings.

Fig. 5 shows, in another partly sectional perspective view, a segment of the housing 5 of Fig. 4 including the rib structure 15. It illustrates the depth H of the hollow ribs in more detail. The greater the effective (i.e. increased) axial length of the housing 5 achieved with the illustrated rib embossing, the greater the effect of reducing the heat conduction by the housing 5, which allows e.g. a better T-rating. The influencing factors here are the depth H of each rib and the number n of such ribs/embossings, wherein n = 6 by way of example only in Figs. 4 and 5.
F.) Distance due to a specific housing construction II (offset slots or punched holes)
With offset sequences of elongated slots (e.g. punched holes, or otherwise created through holes) in the wall of the housing, a similar ef-feet can be achieved as with hollow ribs, as indicated by heat flux arrows 16 in Fig. 4. and Fig. 6. Depending on the geometric design, the effect of reducing heat conduction may be even significantly greater with offset slots than with a corrugated profile of feature E.). The effect is illustrated in Figs. 1, 6 and 7:

Fig. 6 shows a perspective, partially sectional view of a firestop system according to another exemplary embodiment. Here, the firestop through penetration device (only indicated by its housing 5 in Fig. 6) is installed in firewall 2 with opposite sides 8 and 9 and possesses offset slots 17 in the centre of its housing 5. The housing 5 has, again, by way of example only, a rectangular cross-section.

The elongated slots 17 extend in a circumferential direction of the housing 5, which is in this example perpendicular to the axial direction of the housing 5 (cf. channel axis A in Fig. 1). The slots 17 are arranged in slot lines 18 (in this example, in five lines 18), each line 18 extending in the direction of its slot(s) 17. In this example, some of the lines 18 contain only one long slot 17, other lines 18 containing several slots 17. The lines 18 are successively arranged in the axial direction of the housing 5, and the slots 17 of each line 18 are offset to the slots 17 of the neighbouring lines 18 in the circumferential direction. Due to this staggered arrangement of the slots 17, the length of heat conduction paths connecting the opposite openings of the housing 5 and running between the slots 17 is increased, as indicated by the wavy shape of the heat flux arrow 16.

Fig. 7 shows a further improved slot (e.g. punching hole) geometry that helps to further considerably reduce the heat flow, compared to Fig. 6. This is achieved by a significantly higher proportion of the lengths of the slots 17 to the distances between them, in comparison to Fig. 6. In other words, the length of each slot 17 is still larger in Fig. 7, which means that the distance needed for heat transfer to the cold side of the firewall 2 is much longer than in Fig. 6. To avoid repetitions, with respect to other features, which are the same as in Fig. 6, reference is made to the above description of Fig. 6.
G.) Heat flow outside the wall section
Punched holes or slots 17b (cf. Figs. 1 and 8) arranged outside the wall element 2 are also particularly helpful to reduce thermal conduction on the housing 5. As air is a good insulator, heat must be transported through the housing material. By a staggered arrangement of slots 17b in an axial segment of the housing 5 arranged outside the breakthrough 3, the length of heat conduction paths in the housing 5 can, thus, be considerably increased. This is, by way of example only, illustrated in Fig. 8 using an example of a housing 5 whose axial length significantly exceeds the thickness of the firewall 2:

Fig. 8 schematically shows a perspective, partly sectional view of a firestop system according to a still further exemplary embodiment of the invention with a firestop through penetration device (only indicated by its housing 5 in this Figure) having a sequence of lines with strongly overlapping offset slots 17a and 17b as well as a structure 15 of hollow ribs extending in parallel with the slots 17a and 17b. The ribs partly alternate with the successive slots 17a, 17b in the axial direction of the housing 5. Fig. 8 shows, by way of example, only one of many different possible combinations of the individual features E.), F.), and G.) proposed herein.

So, in Fig. 8, the axial length of the housing 5, as measured between its opposite openings 6 and 7, is about 4-5 times (by way of example only) greater than the wall thickness of the firewall 2 element. In this example, the housing 5 is centrally installed in the breakthrough 3, so that its axial segments arranged outside the breakthrough 3 have approximately equal lengths on either side 8 and 9 of the firewall 2. Such a central arrangement, though it is not indispensable (i.e. not limiting) in terms of the present invention, may have advantages for both mechanical stability and thermal conduction reduction of the proposed firestop system. Implementing the above-mentioned feature G.) in Fig. 8, the slot lines are formed not only in a central axial segment of the housing 5 arranged within the breakthrough 3 of the firewall 2 (slots 17a), but also in both axial segments arranged outside it (slots 17b).

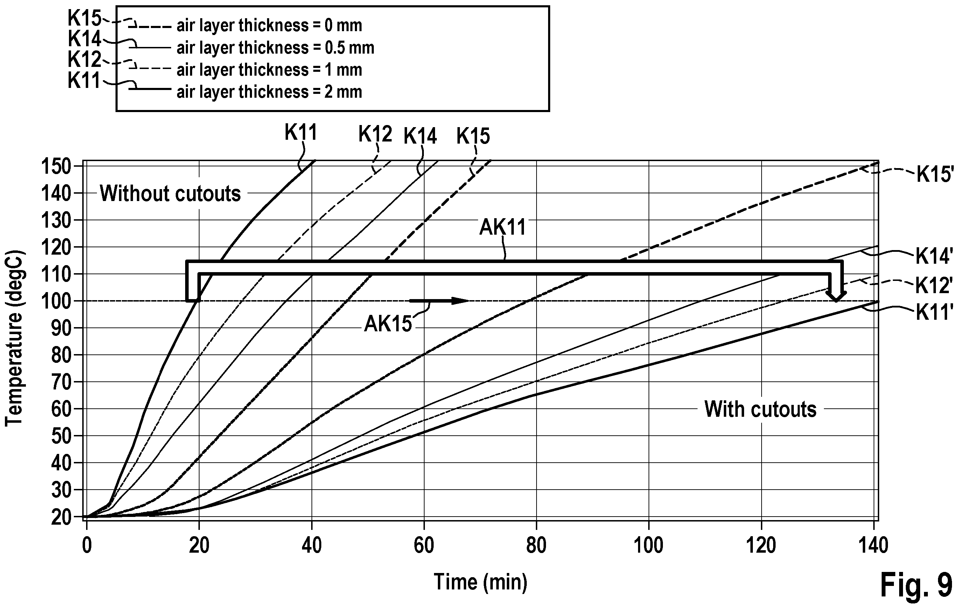

This is also the case in Fig. 1, described partly further above and partly in the following. Whereas the hollow ribs are curved inwards in Figs. 4, 5, and 8, they can also be curved outwards, as illustrated in Fig. 1. The rib backs 19 of the rib structure 15 (as illustrated in Fig. 1) may be particularly useful to enable a defined thermal and/or mechanical contact of the housing 5 with the substrate (i.e. with the firewall material within the breakthrough 3), to which heat can be effectively dissipated over the backs 19 of the ribs. As already mentioned above with reference to feature C.), in contrast to Fig. 3, simulation results presented in Fig. 9 revealed, that a gap of 0 mm or a complete filling of the annular gap with mortar etc. is not favourable in combination with the slots 17a (feature F.) formed in the housing 5 within the breakthrough 3, as this would cancel out the effect of these slots 17a:

So, Fig. 9 shows a diagram presenting simulation results of temperature over time measured on a metallic square sleeve (or housing) on its side facing away from fire for different thicknesses of air layer (or radial gap) separating it from the material of the firewall, in each case with and without the offset slots (denoted as "cutouts" in the Fig. 9). This diagram shows the combination of the effects of a good or bad contact with the substrate and that of the cutouts/slots. As found out by comparing the respective pairs of curves (K11 vs. K11', ..., K15 vs. K15') corresponding to different air gap thicknesses (2 mm, 1 mm, 0.5 mm, and 0 mm, respectively), in all cases, cutouts (slots) reduce heat transfer to the side facing away from the fire, but an air gap around the housing element is helpful in this case. In other words, the larger the thickness of the air, the better the effect of the cutouts/slots, as evident form comparing the arrows AK11 and AK15.

As illustrated in an example of Fig. 1, it was further found out that an ideal combination of slots 17a and contact with the substrate is when there is only little or no contact with the substrate. The latter is, for example, possible by means of the backs 19 of the hollow rib structure 15 shown in Fig. 1, which allows to maintain an air layer as thick as the height of the ribs around the housing 5 within the breakthrough 3 of the firewall 2, providing a sufficient thermal and mechanical contact to the substrate at the same time.
H.) Positioning of the expandable (intumescent) fire protection material
As already mentioned above with reference to Fig. 1, which shows a sectional view of a fire protection solution according to the invention, intumescent material elements 11 may be positioned outside the wall opening (breakthrough 3), in particular, if the intumescent materials contain expandable graphite. Graphite is a good heat conductor, which could reduce or, in the worst case, negate the above-described optimization. The offset slots 17b in the fire protection element (i.e. device 4, or its housing 5) outside the firewall section, created e.g. by the punched holes, must remain unsealed to unfold their function. In the event of a fire, the intumescent material would seal the punched holes from the inside, if it was arranged at the axial positions of the slots 17b. Therefore, in Fig. 1, intumescent material elements 11 are only arranged in axial segments which are free of slots 17b (such as close to the opposite openings 6 and 7 of the housing 5). If there are reasons against open punched holes, they can also be closed/covered e.g. with foil-like materials or similar inserts. For example, plastic films are suitable here, as they have lower thermal conductivity than metals and melt away in the event of a fire or during an official fire test. Alternatively (not shown in Fig. 1), the open punched holes can also be closed/covered with a thin isolating material without negative influence.
The thin isolating material can be positioned between the housing 5 and the intumescent material elements 11 and ensures thermal decoupling can be made of glass wool or mineral wool, and has preferably a thickness of 0.80 mm to 5 mm, more preferably of 2 mm to 4 mm.

The firestop system, device, and housing as proposed herein, or their above-described features according to the invention may, in particular, have one or more of the following effects:
- Constructive solution with improved fire protection properties (such as a better T-rating).
- Combination of different (partial) aspects, thus providing sufficient flexibility to adapt the solution for specific applications and their individual requirement.
- The proposed improvements can be achieved without increased material costs through clever arrangement and design of the elements as proposed herein.
- One-piece basic construction of the housing without significant additional effort in the assembly of the construction is possible.
- Cost-effective to manufacture.
- Lower housing temperature in the event of fire; better T-ratings, broader scope of approval.

## Claims

1. A metallic housing (5) for a firestop through penetration device (4), which housing (5)
- is preformed to be installed in a breakthrough (3) of a firewall (2), so as to form a side wall of an axial channel having opposite openings (6, 7) to both sides (8, 9) of the firewall (2) and configured to receive penetrants (10); and
- has one or more of the following constructional features, so as to reduce thermal conduction between its opposite openings (6, 7):
- a radial thickness of less than 2 mm; and/or
- stainless steel, chrome steel, and/or other steel alloys with chrome, nickel, molybdenum, titanium, and/or tungsten used as its material(s); and/or
- a corrugated longitudinal profile, so as to increase the length of heat conduction paths connecting the opposite openings (6, 7); and/or
- a plurality of slots (17, 17a, 17b), each of which extends at least partly in a circumferential direction of the housing (5), the slots (17, 17a, 17b) being successively arranged in the axial direction with offsets, so as to increase the length of heat conduction paths connecting the opposite openings (6, 7).

2. The housing (5) according to claim 1, wherein
- the material(s) of metallic parts of the housing (5) is/are selected from the group of: stainless steel, chrome steel, or other steel alloys with chrome, nickel, molybdenum, titanium, and/or tungsten; and
- the radial thickness of the metallic parts of the housing (5) is between 0.4 mm and 1 mm.

3. The housing (5) according to claim 1 or 2, wherein
- said corrugated longitudinal profile is at least partly formed by a plurality of hollow ribs, which extend at least partly in a circumferential direction of the housing (5) and are successively arranged in its axial direction.

4. The housing (5) according to one of the preceding claims, wherein
- said plurality of slots (17, 17a, 17b) comprises at least two lines (18) extending at least partly in a circumferential direction of the housing (5) and successively arranged in its axial direction;
- each line (18) is formed by one or more slots (17, 17a, 17b) extending at least partly in its direction; and
- the slots (17, 17a, 17b) of one of said lines (18) are offset in the circumferential direction of the housing (5) with respect to the slots (17, 17a, 17b) of at least one of the other lines (18), so that the length of metallic heat conduction paths running between the slots (17, 17a, 17b) and connecting the opposite openings (6, 7) of the housing (5) is increased.

5. The housing (5) according to claim 4, wherein
- in at least one of said lines (18), each slot (17, 17a, 17b) is at least twice, preferably at least three to five times and most preferably at least five to ten times, as long as the distance between the successive slots (17, 17a, 17b), both being measured along the respective line (18); and/or
- in an orthogonal projection onto a cross-sectional plane of the housing (5), the slots (17, 17a, 17b) of at least one of these lines (18) overlap the slots (17, 17a, 17b) of at least one of the other lines (18) by at least a half of their respective slot lengths measured in the respective line direction; and/or
- the slots (17, 17a, 17b) of at least one of these lines (18) are offset in the respective line direction by at least a quarter, preferably at least a third, of their lengths relatively to the slots (17, 17a, 17b) of another one of these lines (18).

6. A firestop through penetration device (4) preformed to be installed in a firewall (2) and to create a penetrant feedthrough, the device (4) comprising:
- a housing (5) according to one of the preceding claims; and
- a fire seal arranged in the housing (5) and configured to surround penetrants (10) inserted in the channel and to seal the channel, at least in the event of fire, against smoke and/or flames and/or liquids; the fire seal preferably comprising intumescent material.

7. The device (4) according to claim 6,
- preformed so as to be readily installed in a firewall (2), thereby providing a predefined level of insulation protection in case of fire alone by a suitable combination of said constructional features of the housing (5) and the fire seal, without a need for additional insulation material and/or measures, in particular without filling plaster, mortar or other curing compounds into an annular gap which may be left between the housing (5) and an inner surface of the breakthrough (3); and/or
- configured to be installed in a firewall (2) whose thickness is equal to or less than a total axial length of the device (4) and may, in particular, lie between 100 mm and 150 mm and, preferably, also be 100 mm or even less.

8. The device (4) according to claim 6 or 7, wherein
- the fire seal comprises intumescent material; and said intumescent material is arranged only in axial segments close to the opposite openings (6, 7) of the housing (5), said axial segments being spatially separated by a central segment, which is free of intumescent material; and/or
- the fire seal comprises intumescent material which contains expandable graphite; and said intumescent material is arranged only in those axial segments of the housing (5) which are free of said slots (17, 17a, 17b); and/or
- the fire seal comprises foam material and/or mineral wool arranged in a central axial segment of the housing (5).

9. The device (4) according to claim 6 or 7, wherein
- the fire seal comprises intumescent material; and said intumescent material is arranged in a central axial segment of the housing (5); and/or
- the fire seal comprises intumescent material which contains expandable graphite; and said intumescent material is arranged only in those axial segments of the housing (5) which are free of said slots (17, 17a, 17b); and/or
- the fire seal comprises foam material and/or mineral wool arranged only in axial segments close to the opposite openings (6, 7) of the housing (5), said axial segments being spatially separated by a central segment, which is free of foam material and/or mineral wool in a central axial segment of the housing (5).

10. The device (4) according to claim 8 or 9, wherein
- the fire seal comprises a thin isolating material, which isolating material is arranged only in those axial segments of the housing (5) showing the slots (17, 17a, 17b), whereas the thin isolating material covers the slots (17, 17a, 17b); and said intumescent material is also arranged in those axial segments of the housing (5) which show said slots (17, 17a, 17b).

11. A firestop system (1), comprising:
- a firewall (2) or firewall element including a breakthrough (3); and
- a firestop through penetration device (4) according to one of claims 6 through 10 installed in the breakthrough (3) of said firewall (2) or firewall element, thus creating or enabling a penetrant feedthrough; wherein, preferably:
- in an axial segment arranged within the breakthrough (3), the housing (5) of the device (4) has at least one slot-free segment and is installed such that said slot-free segment of the housing (5) is either in a direct mechanical and thermal contact with the inner surface of the breakthrough (3) or is in a direct mechanical and thermal contact with a material having a high thermal conduction and/or thermal capacity arranged in an annular gap formed between the housing (5) and the inner surface of the breakthrough (3); and/or
- in an axial segment arranged within the breakthrough (3), the housing (5) of the device (4) has said slots (17, 17a, 17b) and is installed such that a gap of a predetermined radial thickness is left between a segment having said slots (17, 17a, 17b) and the inner surface of the breakthrough (3); and/or
- the axial length of the device (4) exceeds the thickness of the firewall (2), and in at least one of the axial segments arranged outside the breakthrough (3), the housing (5) of the device (4) has said slots (17, 17a, 17b) which are left empty or filled or covered with a non-metallic material having a lower thermal conductivity and/or a lower melting point than metallic material(s) of the housing (5); and/or
- the axial length of the device (4) exceeds the thickness of the firewall (2), and in at least one of the axial segments arranged outside the breakthrough (3), the fire seal comprises intumescent material which contains expandable graphite; and said intumescent material is arranged only in those axial segments of the housing (5) which are free of said slots (17, 17a, 17b) or said intumescent material is arranged the axial segments of the housing (5) and covers at least partly said slots (17, 17a, 17b).

12. The system (1) according to claim 10, wherein,
- in its axial segment arranged within the breakthrough (3), the housing (5) of the device (4) has at least one segment including said slots (17, 17a, 17b) and at least one slot-free segment which includes one or more hollow ribs, each rib being curved outwards and all ribs having the same predetermined height in the radial direction of the housing (5); and
- the housing (5) is installed in the breakthrough (3) such that the backs (19) of said ribs are in a direct mechanical contact with the inner surface of the breakthrough (3), whereby said gap having a radial thickness equal to the rib height is formed between the segment of the housing (5) having said slots (17, 17a, 17b) and the inner surface of the breakthrough (3).
